# EUROPEAN PATENT APPLICATION

(11) **EP 2 589 532 A2**
(43) Date of publication of application: **08.05.2013**
(21) Application number: 11763746.2
(22) Date of filing: 30.06.2011
(51) Int. Cl.: B64C 1/06

(54) **AIRCRAFT FUSELAGE MADE OUT WITH COMPOSITE MATERIAL AND MANUFACTURING PROCESSES**

(30) Priority: 30.06.2010 ES 201031017
(71) Applicant: Airbus Operations, S.L., 28906 Getafe Madrid (ES)
(72) Inventor: ARÉVALO RODRÍGUEZ, Elena, E-28035 Madrid (ES); CRUZ DOMÍNGUEZ, Francisco José, E-28027 Madrid (ES)
(74) Representative: Elzaburu Marquez, Alberto
(86) International application number: PCT/ES2011/070478
(87) International publication number: WO 2012/001207

(57) **Abstract**

Aircraft fuselage made out with composite material and manufacturing processes. The structure of the fuselage (11) comprises a skin (13), a plurality of frames (17) positioned transversely to the longitudinal axis (9) of the fuselage (11) and a plurality of longitudinal stiffening elements (14, 15) that can be either stringers (14) or beams (15), being the ratio between the distance (X) between frames (17) and the distance (Y) between longitudinal stiffening elements (14, 15) is less than one. If the stiffening elements are stringers (14) the manufacturing process is based on assembling the fuselage section (11) joining the skin (13) with the stringers (14) to the frames (17). If the stiffening elements are beams (15) the manufacturing process is based on joining the skin to an internal structure made up with frames (17) and beams (15).

## Description

### FIELD OF THE INVENTION

The present invention refers to an aircraft fuselage and more particularly to an aircraft fuselage made out entirely with composite material as well as to processes for its manufacture.

### BACKGROUND OF THE INVENTION

It is commonly known that the aeronautical industry requires structures which, on the one hand, support the loads to which they are subjected fulfilling high stiffness and resistance demands and, on the other hand, are as light as possible. A consequence of this requirement is the continuously expanding use of composite materials in primary structures because, by conveniently applying these materials, an important weight reduction can be achieved compared with structures designed with metallic materials.

Integrated structures have proven to be especially efficient in this respect. A structure is called integrated when all its structural components are manufactured in one shot. This is another advantage of using composite materials because as having less individual pieces to assemble, due to them being made up of independent layers which can be laid up in the desired order, they offer the possibility of more integration in the structure, which also usually produces money savings, an essential factor in order to compete in the market.

As is well known, the main structural elements of aircraft fuselages are the skin, the frames and the stringers. The skin is stiffened longitudinally with stringers to reduce the skin thickness, making it more competitive in terms of weight, while the frames avoid the overall instability of the fuselage and can be subjected to the introduction of local loads. Other structural elements can be found inside an aircraft fuselage, such as beams, which act as a frame for open sections of the fuselage or which are used to withstand the loads introduced by the cabin floor of the aircraft.

The fuselage structure made out of composite materials which is nowadays more commonly used consists, on the one hand, of a skin with integrated stringers, co-bonded or co-cured, and on the other hand, of complete or floating frames which are manufactured separately and which are then riveted to the fuselage skin. The document US 5,242,523 describes a structure such as this one.

An essential feature of this structure is that the fuselage is made up of panels delimited by said frames and stringers which are oriented longitudinally because the distance between stringers is smaller than the distance between frames. In other words, the number of stringers per unit of surface area of the skin is bigger than the number of frames.

This fuselage structure has, among others, the problem that the great number of stringers makes difficult achieving high levels of integration in the case of fuselages made out of composite materials.

The present invention focuses on finding a solution for these drawbacks.

### SUMMARY OF THE INVENTION

An object of the present invention is to provide an aircraft fuselage made out preferably with composite materials and structured in a way that allows its manufacture with a high level of integration.

Another object of the present invention is to provide an aircraft fuselage made out preferably with composite materials and structured so that it has a high damage tolerance.

Another object of the present invention is to provide an aircraft fuselage made out preferably with composite materials and structured so that it allows the inclusion of areas with local load introductions.

In one aspect, these and other objects are achieved with a fuselage section whose structure comprises a skin, a plurality of frames positioned transversely to the longitudinal axis of the fuselage, and a plurality of longitudinal stiffening elements, in which the ratio between the distance between frames and the distance between longitudinal stiffening elements is less than one.

In a preferred embodiment, the longitudinal stiffening elements are stringers which are not joined to the frames where they cross. Hereby it is achieved a structured fuselage with a smaller number of stringers, which facilitates its manufacture and reduces its cost.

In another preferred embodiment, these longitudinal stiffening elements are beams joined to the frames where they cross. Hereby it is achieved a resistant and damage tolerant fuselage whose structure facilitates its manufacture and reduces its cost.

In another aspect, in the case of a fuselage section whose individual stiffening elements are stringers, the objects mentioned are achieved by a manufacturing process of the fuselage section comprising the following steps: a) Providing the frames as complete pieces. b) Providing the skin in two or more parts with the stringers joined to it. c) Assembling the section of the fuselage by joining said parts of the skin to the frames.

In another aspect, in the case of a fuselage whose individual stiffening elements are beams, the objects mentioned are achieved by a manufacturing process of a fuselage section comprising the following steps: a) Providing the fuselage internal structure, made up of frames and beams, in one piece. b) Providing the skin. c) Joining the skin to said fuselage internal structure by means of rivets.

In preferred embodiments said step a) is carried out in several sub-steps using co-curing, co-bonding, secondary bonding or riveting techniques for joining all structure components which, depending on the case, will be provided as preforms or as cured components.

Other characteristics and advantages of the present invention will be clear from the following detailed description of embodiments illustrative of its object in relation to the attached figures.

### DESCRIPTION OF THE DRAWINGS

Figure 1a schematically shows an array of longitudinally oriented panels of a fuselage according to the prior art and Figure 2a schematically shows an array of panels circumferentially oriented in a fuselage according to the present invention.
Figures 2a and 2b show schematic views in perspective and in transversal section along the plane A-A of a fuselage according to a first embodiment of the present invention.
Figures 3a and 3b show schematic views in perspective and in transversal section along the plane A-A of a fuselage according to a second embodiment of the present invention.
Figure 4 is a partial perspective view of a fuselage internal structure according to a first embodiment of the present invention for a fuselage section whose individual stiffening elements are stringers.
Figure 5 is a perspective view of a fuselage internal structure according to a second embodiment of the present invention for a fuselage section whose individual stiffening elements are beams.

### DETAILED DESCRIPTION OF THE INVENTION

### Circumferential orientation of the fuselage panels

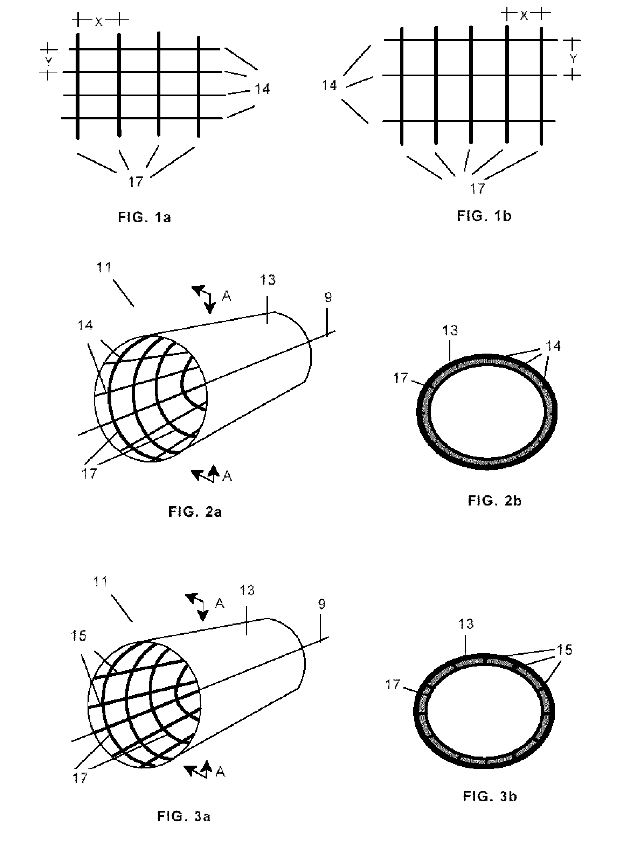

The basic idea of the present invention is to structure a fuselage section of an aircraft in a way that its panels are oriented circumferentially, as opposed to their longitudinal orientation in known fuselages. In these, as is illustrated in Figure 1a, the distance X between frames 17 is bigger than the distance Y between stringers 14, while in the fuselage section according to the present invention, illustrated in Figure 1b, the distance X between frames 17 is smaller than the distance Y between stringers 14.

In known fuselages, the typical value for the X/Y ratio can be 2.5, while for fuselages according to the present invention said typical value can be 0.6.

A first effect of the circumferential orientation of the panels is that they take advantage of the curvature of the fuselage to resist longitudinal loads, delaying the beginning of buckling. This improvement of the panel's post-buckling capacity allows a reduction of the skin's weight.

A second effect of the circumferential orientation of the panels is that it facilitates the transmission of the circumferential loads to the frames, hence reducing the level of circumferential load in the panels.

A third effect of the circumferential orientation of the panels is that it permits a greater integration of the structure and a costs reduction.

Among others, the "multiframe" structure of the fuselage according to the present invention corresponding to the circumferential orientation of the fuselage panels has the following advantages:
- It is more tolerant to damage than a conventional structure as it has more load paths.
- It is especially suited to areas with local load inputs (Vertical Tail Plane, Pylon, etc), because by having a greater number of frames, the circumferential flows in the skin are reduced. In addition, in areas receiving high local loads, by having more frames, the load on each of them is reduced, so that the manufacture of each of these frames out of composite materials is simplified.

These and other advantages will be better appreciated in the two embodiments of the invention that will be now described.

### Fuselage with a reduced number of stringers

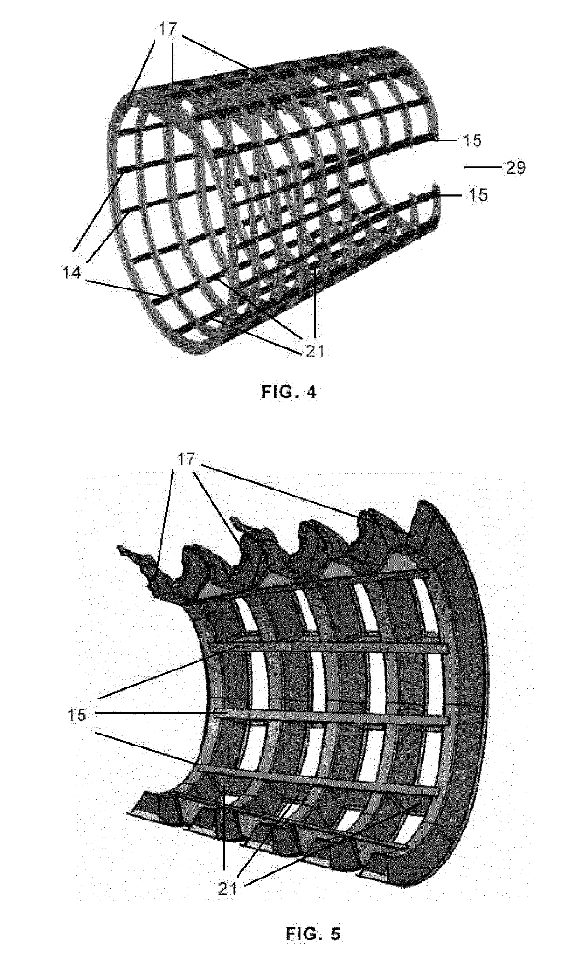

In Figures 2a, 2b and 4, it can be observed that, in a first embodiment of the invention, the fuselage section 11 comprises a skin 13 which is structured to withstand longitudinal, transversal and mainly shear loads in the plane. The stringers 14 (in a smaller number than in the case of the panels oriented longitudinally) are used to obtain the sufficient bending stiffness of the skin 13 and the frames 17 are used to stabilize it against buckling, without increasing its thickness, avoiding the overall instability of the fuselage section 11. The skin 13, stiffened with stringers 14, assumes the flows of longitudinal load of the fuselage, while the frames 17 together with the skin 13 mainly withstand transverse loads of the fuselage and maintain the aerodynamic surface.

Both the skin 13, the stringers 14 and the frames 17 are made out of a composite material which can be either carbon fibre or glass fibre embedded in a matrix of thermosetting or thermoplastic resin.

The aim is to obtain a more efficient structure, both in terms of weight and cost. That is why a possible manufacturing and assembling solution would be to manufacture the frames 17 in one piece (360º) to avoid unions between different segments, manufacturing separately the skin 13 in two or more parts and joining said skin parts to the frames 17, taking advantage of the higher flexibility of said skin parts due to them having a smaller number of longitudinally stiffening elements (stringers).

This fuselage structure is valid for any type of stringers transversal section (T, omega, etc) and any type of frames transversal section (C, I, omega, etc).

The manufacturing process of a fuselage section 11 with the already described structure comprises, then, the following steps:
a) Providing the frames 17 as complete pieces.
b) Providing the skin 13 in two or more parts, with the stringers 14 attached to it.
c) Assembling the fuselage section 11 by joining said parts of the skin 13 to the frames 17.

The fact that the fuselage 11 internal structure is made up with complete frames 17, avoids tolerance problems in the joints between said parts of the skin 13, reducing possible deviations from the theoretical aerodynamic contour. The reduction of the number of stringers 14 decreases the number of intersections with the frames 17, hence facilitating the assembly of the fuselage section 11.

Figure 4 shows the fuselage internal structure that comprises frames 17 with a double T shaped transversal section and stringers 14 with a T shaped transversal section and a great aperture 29 designed to receive, for example, an horizontal tail plane torsion box, a box of the engines supporting element, or other components, having two beams 15 as a frame for said aperture.

In another embodiments of the present invention, the frames 17 and the stringers 14 can have transversal sections with different shapes, such as C, I or J shapes.

### Fuselage with beams

Following Figures 3a, 3b and 5, it can be observed that, in a second embodiment of the invention, the fuselage section 11 comprises a skin 13, structured to withstand longitudinal, transversal and mainly shear loads in the plane. The beams 15 are used to obtain the sufficient bending stiffness of the skin 13 and the frames 17 are used to stabilize it against buckling, without increasing its thickness, avoiding the overall instability of the fuselage 11. The beams 15 together with the skin 13 assume mainly the longitudinal load flows of the structure, while the frames 17 together with the skin 13 mainly withstand the transversal loads of the structure and maintain the aerodynamic surface.

The fuselage internal structure made up of complete frames 17 and beams 15 is manufactured, as will be seen later, as a unique piece to reduce as much as possible the unions between its members. The skin (manufactured separately in two or more parts) is then riveted to the fuselage internal structure, hence considerably simplifying the assembly process and reducing costs. This results in a highly integrated fuselage internal structure, in which the frames 17 and beams 15 form a grid whose structure is very efficient in terms of strength and stiffness and which facilitates an optimization of the weight of the whole fuselage. Such a highly integrated structure which also lacks any stringers entails savings in the assembling process.

With this structure, the skin 13, along with the beams 15, take care of bending and longitudinal loads, while the frames 17 avoid the global instability of the fuselage 11, distribute and support, together with the skin 13, the circumferential loads and can have introductions of local loads, and, finally, the grid formed by the frames 17 and the beams 15 joined where they cross, together with the skin 13, support the torsion loads.

In their turn, the beams 15 also give support to the webs of the frames 17, which means no additional stiffeners are needed to avoid the buckling of said webs, which reduces the number of auxiliary pieces and the number of joints between pieces, hence simplifying the manufacturing process.

As there are no stringers, the frames do not need any "mousehole" for them to pass through, so the fuselage is not penalized structurally and the step of making these holes is eliminated from the manufacturing process.

The internal grid which results from joining frames 17 and beams 15 is a more damage tolerant structure than the conventional one, so that up against a severe damage in one part of the fuselage, the remaining structure is able to cope better with the load requirements without making it catastrophic.

Both the skin 13, the beams 15 and the frames 17 are made out of a composite material which can be either carbon fibre or glass fibre embedded in a matrix of thermosetting or thermoplastic resin.

Figure 5 shows a preferred embodiment of the present invention in which the fuselage internal structure includes frames 17 with an omega shaped transversal section and beams 15 with a double T shaped transversal section.

In another embodiments of the present invention, the frames 17 and the beams 15 can have transversal sections with different shapes, such as C, I or J shapes.

The present invention also refers to a manufacturing process for a fuselage section with the structure that has been described in which the first stage is manufacturing separately the fuselage internal structure and the skin and the second stage is the union of the skin (divided, if convenient, in parts) to the fuselage internal structure by means of rivets.

The manufacturing process for the fuselage internal structure, whether as complete sections (360º) or in two or three sectors, is based upon the placement of preforms of the frames 17 and beams 15, whether complete or in parts, on a tool with the shape of the grid and its co-curing in a unique curing cycle or the co-bonding between beams 15 and frames 17, having previously submitted either the first or the later to a first curing cycle. In the case of the frames 17 whose section has an omega shape (or any other type of closed section) as the one illustrated in Figure 5, some preforms of stabilizing ribs of the frames 17 in the crossing areas with the beams 15 must be prepared.

In the case of conforming the structure by co-curing, the aforementioned grid is created starting off from individual elements which are integrated since their lay up and which assume several structural functions. This means that we obtain all the advantages that an integrated structure entails, as well as reducing the manufacturing costs due to the fact that there are less independent pieces and that the composite materials require a costly curing process, so the smaller the number of independent pieces, the smaller the number of curing cycles needed, hence reducing the costs as well as obtaining a more uniform transmission of loads between the components that make up the structure.

As the skilled man may well understand, the manufacturing of the fuselage internal structure may require additional tooling, depending on the particular shapes of the transversal sections of beams 15 and frames 17 to provide the correct transmission and continuity of loads where they cross, as well as introducing "rowings" (straps of unidirectional fibres which must be of the same material as the one used in the lay-up, or a compatible one) to avoid holes and ensure an optimum co-curing.

In his turn, the skilled man will understand that the preparation of said frame and beam preforms will be undertaken using conventional techniques for their lay-up and their conforming.

It is also possible to make up the structure providing the frames 17 and the beams 15 cured, whether as complete pieces or in parts, and joining them in its crossing areas by means of a secondary bonding or a riveting.

With respect to the manufacturing of the skin, it is considered convenient to manufacture it in two or more parts to facilitate its joining to the fuselage internal structure.

Although the present invention has been fully described in connection with preferred embodiments, it is evident that modifications may be introduced within the scope thereof, not considering this as limited by these embodiments, but by the contents of the following claims.

## Claims

1. Fuselage section (11) of an aircraft whose structure comprises a skin (13), a plurality of frames (17) positioned transversely to the longitudinal axis (9) of the fuselage (11) and a plurality of longitudinal stiffening elements (14, 15), **characterized in that** the ratio between the distance (X) between frames (17) and the distance (Y) between longitudinal stiffening elements (14, 15) is less than one.

2. Fuselage section (11) of an aircraft according to claim 1, **characterized in that** said longitudinal stiffening elements are stringers (14) which are not joined to the frames (17) where they cross.

3. Fuselage section (11) of an aircraft according to claim 2, **characterized in that** said skin (13), said frames (17) and said stringers (14) are made out with composite material.

4. Fuselage section (11) of an aircraft according to claim 1, **characterized in that** said longitudinal stiffening elements are beams (15) and **in that** said beams (15) are joined to the frames (17) where they cross.

5. Fuselage section (11) of an aircraft according to claim 4, **characterized in that** said skin (13), said frames (17) and said beams (15) are made out with composite materials.

6. Manufacturing process of a fuselage section (11) according to claim 3, as a complete section or as one sector of it, **characterized by** comprising the following steps:
a) providing the frames (17) as complete pieces;
b) providing the skin (13) with the stringers (14) joined to it;
c) assembling the fuselage section (11) joining the skin (13) with the stringers (14) to the frames (17).

7. Manufacturing process of a fuselage section (11) according to claim 5, as a complete section or as one sector of it, **characterized by** comprising the following steps:
a) providing the fuselage internal structure made up of frames (17) and beams (15);
b) providing the skin (13);
c) joining the skin (13) to said fuselage internal structure by means of rivets.

8. Manufacturing process of a fuselage section (11) according to claim 7, **characterized in that** said step a) is carried out by the following sub-steps:
a1) providing a suitable tool;
a2) providing preforms of frames (17) and beams (15), whether complete or in parts, so that continuous and/or discontinuous frames (17) and/or beams (15) can be conformed, and placing them on said tool;
a3) making the internal structure undergoing a curing cycle.

9. Manufacturing process of a fuselage section (11) according to claim 8, **characterized in that** if the shape of the transversal section of said frames (17) is a closed shape, said sub-step a2) also comprises providing preforms of stabilizing ribs in the crossing areas with beams (15).

10. Manufacturing process of a fuselage section (11) according to claim 7, as a complete section or as one sector of it, **characterized in that** said step a) is carried out by the following sub-steps:
a1) providing a suitable tool;
a2) providing cured frames (17) and/or beams (15), whether complete or in parts, and placing them on said tool;
a3) providing the preforms of frames (17) and/or beams (15)), whether complete or in parts, needed for conforming the internal structure and placing them on said tool;
a4) co-bonding said preforms to said cured frames (17) and/or beams (15) in a curing cycle.

11. Manufacturing process of a fuselage section (11) according to claim 10, **characterized in that** if the shape of the transversal section of said frames (17) is a closed shape, said sub-step a3) also comprises providing preforms of stabilizing ribs in the crossing areas with beams (15).

12. Manufacturing process of a fuselage section (11) according to claim 7, as a complete section or as one sector of it, **characterized in that** said step a) is carried out by the following sub-steps:
a1) providing a suitable tool;
a2) providing cured frames (17) and/or beams (15), whether complete or in parts, for conforming the internal structure;
a3) joining frames (17) and beams (15) in their crossing areas by means of a secondary co-bonding.

13. Manufacturing process of a fuselage section (11) according to claim 12, **characterized in that** if the shape of the transversal section of said frames (17) is a closed shape, said sub-step a2) also comprises providing stabilizing ribs in the crossing areas with beams (15).

14. Manufacturing process of a fuselage section (11) according to claim 7, as a complete section or as one sector of it, **characterized in that** said step a) is carried out by the following sub-steps:
a1) providing a suitable tool;
a2) providing cured frames (17) and/or beams (15), whether complete or in parts, for conforming the internal structure;
a3) joining frames (17) and beams (15) in their crossing areas by means of rivets.

15. Manufacturing process of a fuselage section (11) according to claim 14, **characterized in that** if the shape of the transversal section of said frames (17) is a closed shape, said sub-step a2) also comprises providing stabilizing ribs in the crossing areas with beams (15).
